# EUROPEAN PATENT APPLICATION

(11) **EP 4 826 867 A1**
(43) Date of publication of application: **21.10.2026**
(21) Application number: 25170622.2
(22) Date of filing: 15.04.2025
(51) Int. Cl.: H01M 50/209, H01M 50/258

(54) **A BATTERY MODULE, A METHOD FOR ASSEMBLING A BATTERY MODULE, AND A BATTERY PACK INCLUDING A PLURALITY OF BATTERY MODULES**

(71) Applicant: SAMSUNG SDI CO., LTD., Yongin-si, Gyeonggi-do 17084 (KR)
(72) Inventor: Maresch, Dominik, 8071 Hausmannstaetten (AT)
(74) Representative: Gulde & Partner

(57) **Abstract**

The present disclosure refers to a battery module (100). The battery module (100) includes a battery cell stack (140) with battery cells (141) stacked between a first end side (I) and a second end side (II) in a stacking direction (D). The battery module (100) further includes a module wall (130), the module wall (130) comprising two oppositely arranged side walls (131, 132) extending along the stacking direction (D) and between which the battery cell stack (140) is arranged, and an end wall (133) arranged on the first end side (I) of the battery cell stack (140) and connecting the two side walls (131, 132), Furthermore, the battery module (100) includes a first end plate (110) arranged on the second end side (II) of the battery cell stack (140) and opposite the end wall (133), wherein each of the side walls (131, 132) is connected to the first end plate (110) by means of a form-fit sliding connection (SC), wherein a sliding direction (SD) extends perpendicular to the stacking direction (D).The disclosure further relates to a method for assembling a battery module (100) according to the disclosure and a battery pack including a plurality of battery modules (100) according to the disclosure.

## Description

### Field of the Disclosure

The present disclosure relates to a battery module. The present disclosure also relates to a method for assembling the battery module and to a battery pack including a plurality of the battery modules.

### Technological Background

A battery module is formed of a plurality of battery cells connected together in series or in parallel. That is, the battery module is formed by interconnecting the electrode terminals of the plurality of battery cells depending on a desired amount of power and in order to realize a high-power rechargeable battery.

Battery modules can be constructed either in a block design or in a modular design. In the block design each battery cell is coupled to a common current collector structure and a common battery management system and the unit thereof is arranged in a housing. In the modular design, pluralities of battery cells are connected together to form submodules and several submodules are connected together to form the battery module. In automotive applications, battery systems generally include a plurality of battery modules connected together in series to provide a desired voltage.

A battery pack is a set of any number of (for example identical) battery modules or single battery cells. The battery modules, respectively battery cells, may be configured in a series, parallel or a mixture of both to deliver the desired voltage, capacity, and/or power density. Components of a battery pack include the individual battery modules, and the interconnects, which provide electrical conductivity between the battery modules.

The mechanical integration of a battery pack requires appropriate mechanical connections between the individual components, e.g. of battery modules, and between them and a supporting structure of the vehicle. These connections must remain functional and save during the average service life of the battery system. Further, installation space and interchangeability requirements must be met, especially in mobile applications.

Mechanical integration of battery modules may be achieved by providing a carrier framework and by positioning the battery modules thereon. Fixing the battery cells or battery modules may be achieved by fitted depressions in the framework or by mechanical interconnectors such as bolts or screws. Alternatively, the battery modules are confined by fastening side plates to lateral sides of the carrier framework. Further, cover plates may be fixed atop and below the battery modules.

The carrier framework of the battery pack is mounted to a carrying structure of the vehicle. In case the battery pack shall be fixed at the bottom of the vehicle, the mechanical connection may be established from the bottom side by for example bolts passing through the carrier framework of the battery pack. The framework is usually made of aluminum or an aluminum alloy to lower the total weight of the construction.

The mechanical design of the battery cell stack/module should be such that it can withstand the so-called "swelling forces" caused by internal chemical processes in the cell itself during operation. Forces up to 40kN and more should be resisted.

It is common to fix end plates by conventional (laser) welding methods. Only an appropriately designed overlap area is necessary to handle different compression length values. Alternative mechanical fixings, such as conventional screw fixings in combination with longitudinal drilling, are usually not economically feasible for reasons of space and are technically unacceptable with regard to the transmission of high shear forces due to the relative movement of the clamped parts.

Another typical requirement for the design of cell modules is that all contained parts should be protected against corrosion, depending on the application. Therefore, a rust-resistant and weldable material may be selected, as a previously applied coating is burned away after the welding process.

Common materials for the plates, such as stainless steel and aluminum, have only low yield strength values, which means that the parts have to be designed with increased wall thickness to increase the loaded cross-sectional area in order to be able to transmit all mechanical stresses and loads, especially swelling forces. This leads to lower packing efficiency and generally higher costs, for example the part weight increases due to the lower mechanical strength. With conventional steel, on the other hand, an appropriate antirust coating must be applied. Welding is then no longer possible or only in combination with a subsequently applied coating, which is not cost-efficient because welding damages the coating.

EP 3934008 A1 discloses a battery cell arrangement with a tempering device and battery cells. Fluid guiding frame parts are integrally built in a one-piece configuration resulting in a C- or U-shaped frame element. By putting on a frame member on the C- or U-shaped frame element the battery cells are compressed. For this purpose, the frame member is connected with the frame parts by substance-joining or by a detachable force fit.

KR 20210037453 A discloses a battery module with a battery cell stack, a U-shaped frame, whose side plates extend perpendicular to a stacking direction, an upper plate mounted on the U-shaped frame and two end plates extending along the stacking direction. Depressions are formed at edges of side portions of the module frame to connect the end plates to the U-shaped frame.

### Summary of Invention

The invention is defined by the appended claims. The description that follows is subjected to this limitation. Any disclosure lying outside the scope of the claims is only intended for illustrative as well as comparative purposes.

According to one aspect of the present disclosure, a battery module is provided, including a battery cell stack with battery cells stacked between a first end side and a second end side in a stacking direction, a module wall, the module wall including two oppositely arranged side walls extending along the stacking direction and between which the battery cell stack is arranged, and an end wall arranged on the first end side of the battery cell stack and connecting the two side walls, and a first end plate arranged on the second end side of the battery cell stack and opposite the end wall, wherein each of the side walls is connected to the first end plate by means of a form-fit sliding connection, wherein a sliding direction extends perpendicular to the stacking direction.

According to another aspect of the present disclosure, a method for assembling a battery module is provided, including the steps of a) providing a battery cell stack with battery cells stacked between a first end side and a second end side in a stacking direction, b) providing a module wall, the module wall including two side walls arrangeable on opposite sides of the battery cell stack and extendable along the stacking direction, and an end wall arrangeable on the first end side of the battery cell stack and connecting the two side walls to each other, c) compressing the battery cell stack, d) arranging the battery cell stack between the side walls of the module wall, e) providing a first end plate, which is arrangeable on the second end side of the battery cell stack and opposite the end wall and connectable to the two side walls by means of a form-fit sliding connection, a sliding direction running perpendicular to the stacking direction, f) establishing the form-fit sliding connection with the two side walls by sliding the first end plate along the sliding direction.

Yet another aspect of the present disclosure refers to a battery pack, the battery pack including a plurality of battery modules according to the disclosure, configured in a series, parallel or a mixture of both to deliver a desired voltage and current, a battery management system (BMS), and a cooling circuit.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- Fig. 1: illustrates a schematic structure of a battery module in perspective view according to an embodiment.
- Fig. 2A: illustrates a schematic structure of a battery module in perspective view according to another embodiment.
- Fig. 2B: illustrates a schematic structure of the battery module shown in Fig. 2A in top view.
- Fig. 2C: illustrates an enlarged view of a form-fit sliding connection from Fig. 2B in top view.
- Fig. 2D: illustrates a schematic structure of the battery module shown in Fig. 2A in partially exploded view.
- Fig. 3A: illustrates an arrangement during a method according to an embodiment for assembling a battery module according to some embodiments.
- Fig. 3B: illustrates a flow chart of a method according to an embodiment for assembling a battery module according to some embodiments.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. As used herein, the term "and/or" includes any and all combinations of one or more of the associated listed items. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered on the value.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

The electronic or electric devices and/or any other relevant devices or components according to embodiments of the present disclosure described herein may be implemented utilizing any suitable hardware, firmware (e.g. an application-specific integrated circuit), software, or a combination of software, firmware, and hardware. Further, the various components of these devices may be implemented on a flexible printed circuit film, a tape carrier package (TCP), a printed circuit board (PCB), or formed on one substrate. The electrical connections or interconnections described herein may be realized by wires or conducting elements, e.g. on a PCB or another kind of circuit carrier. The conducting elements may include metallization, e.g. surface metallizations and/or pins, and/or may include conductive polymers or ceramics. Further electrical energy might be transmitted via wireless connections, e.g. using electromagnetic radiation and/or light.

Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like.

Also, a person of skill in the art should recognize that the functionality of various computing devices may be combined or integrated into a single computing device, or the functionality of a particular computing device may be distributed across one or more other computing devices without departing from the scope of the exemplary embodiments of the present disclosure.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to one aspect of the present disclosure a battery module is provided. The battery module includes a battery cell stack with battery cells stacked between a first end side and a second end side in a stacking direction. The battery module further includes a module wall, the module wall including two oppositely arranged side walls extending along the stacking direction and between which the battery cell stack is arranged, and an end wall arranged on the first end side of the battery cell stack and connecting the two side walls (to each other), Furthermore, the battery module includes a first end plate arranged on the second end side of the battery cell stack and opposite the end wall, wherein each of the side walls is connected to the first end plate by means of a form-fit sliding connection, wherein a sliding direction extends perpendicular to the stacking direction.

In other words, a battery module may be provided with at least one battery cell stack including a plurality of battery cells stacked along a stacking direction. The battery module may include a module wall partially enclosing the at least one battery cell stack, wherein the module wall may include two side walls extending along the stacking direction on opposite sides of the battery cell stack and an end wall connecting the two side walls at a first stacking end side of the battery cell stack. The battery module may include a first end plate arranged on a second stacking end side of the battery cell stack opposite to the end wall, wherein the first end plate may be connected to the module wall by a form-fit sliding connection with a sliding direction perpendicular to the stacking direction.

In other words, the end wall of the module wall may be adjacent to the first stacking end side of the battery cell stack and may form a receiving surface for the battery cell stack. The end wall may include high strength sheet metal, for example steel.

In other words, the side walls may form lateral boundaries for the battery cell stack and may house the battery cells. The side walls may include high strength sheet metal, for example steel.

The first end plate may extend perpendicular to the stacking direction.

According to one embodiment, one or both side walls include a support surface on an underside or upper side of the battery cell stack extending along the stacking direction. In other words, one or both of the side walls include an area extending perpendicular to the stacking direction and along the stacking direction so as to form a receptacle, for example rectangular, on which the battery cells are stored. The support surface may extend between both side walls. In this way, the battery cells may still be arranged for assembly between the side walls from the other side, which does not have such a support surface, while at the same time being positioned in the desired position by the support surface. The support surfaces of one or both side walls may connect the two side walls or may form a gap extending between the support surfaces such that they do not connect the side walls.

According to another embodiment, the battery module includes a second end plate arranged on the first end side of the battery cell stack adjacent to the end wall and opposite the first end plate and between both mentioned components. The second end plate distributes swelling forces and may have high stiffness, and may include steel. The second end plate can prevent or reduce end cell damage due to squeezing initiated by cell swelling. The second end plate may be designed corresponding to the first end plate and accordingly may have the features of the various disclosed embodiments.

According to another embodiment, the battery module includes spacers disposed between adjacent pairs of battery cells.

The first end plate and/or the second end plate may include module mounting points. This allows easy mounting, for example with frames or other structures. The module mounting points may be openings that extend perpendicular to the stacking direction through the respective plate and parallel to the side walls.

This provides a module wall for a simplified assembly process that eliminates the need for a screwing or welding process. This can reduce effort and costs, as well as errors during screwing or welding.

Accordingly, it is possible to provide a battery module that saves costs and installation space. Due to the sliding connection, it is possible to dispense with a joining process such as welding or screwing. Accordingly, the use of stainless steel or aluminum can be dispensed with for the first and second end plates as well as for the module wall, since a coating can now be provided for the mentioned components. This is not exposed to damage due to the absence of welding, so there is permanent corrosion protection.

In addition, materials may be used for the end plates that have advantageous mechanical properties. The first and second end plates, the end wall and/or the side walls may include steels, for example high-strength steels. These have higher yield strengths than aluminum or stainless steel and have higher strength. This in turn allows the first and second end plates, the end wall and side walls to be thinner-walled, enabling smaller dimensions of the battery modules as well as lower weight. Also, required openings, for example to connect electrical poles, would pose significant stability and strength problems in the case of stainless steels compared with high-strength steels. Furthermore, the steels are considerably less expensive than aluminum or stainless steel.

Furthermore, all mechanical requirements, for example resistance to swelling forces, are met and the connecting mechanism allows easy connection of the first and second end plates to one or both side walls. Furthermore, the accessibility of suitable tools and equipment as well as a simple and cost-effective joining process is ensured.

According to another embodiment, the module wall includes a U-shaped module wall at least partially enclosing the battery cell stack. Such a module wall is a suitable form for the simple arrangement of the battery cells, whereby only a free side opposite the end wall is to be closed by the first end plate.

According to another embodiment, each of the side walls is connected to the end wall by means of a form-fit sliding connection, with a sliding direction running perpendicular to the stacking direction. Accordingly, the end wall is also connected by means of the form-fit sliding connection according to the disclosure, so that the above-mentioned advantages can be achieved on both sides and a high degree of flexibility is achieved during assembly.

According to another embodiment, the form-fit sliding connection is continuous between two opposite side edges of each of the side walls extending along the stacking direction, respectively. In other words, the connection between each of the side walls with the first end plate and/or the second end plate extends along a complete height of a side wall. As a result, the form-fit sliding connection is present over the maximum possible area of each side wall, which results in improved force and stress distribution. In cases where the form-fit sliding connection is only limited to the area of the side wall, high local stress can occur, which should be avoided.

According to another embodiment, a first end of each of the side walls is connected to the first end plate by means of the form-fit sliding connection and/or a second end of each of the side walls is connected to the end wall by means of the form-fit sliding connection. The second end of each of the side walls may additionally or alternatively be connected to the second end plate by means of the form-fit sliding connection. The end connection simplifies the production of a corresponding module wall and utilizes the maximum space provided by the outer contour of the module wall.

According to another embodiment, the module wall is integrally one-piece. This simplifies the production of a module wall. For example, it may be formed from a semi-finished product that only needs to be bent into a corresponding shape according to the disclosure. Furthermore, welding seams or screw connections are further reduced, which on the one hand reduces assembly work and on the other hand further reduces the number of possible weak points. In addition, uniform force distribution is improved when swelling forces occur. This provides a module wall for a simplified assembly process that eliminates the need for a screwing or welding process regarding the end wall. The above-mentioned advantages now also apply to the side walls and the end wall. The one-piece design eliminates the need to assemble the side walls and the end wall, as well as the second end plate, while the sliding mechanism for connecting the first end plate to the module wall considerably simplifies and guarantees assembly. This can reduce effort and costs, as well as errors during screwing or welding.

According to another embodiment, the form-fit sliding connection is formed between a cavity and a fluidly connected slit of the first end plate both extending perpendicular to the stacking direction and a thickened end portion of each of the side walls, wherein the thickened end portions are slidable accommodated inside the corresponding cavity while the side walls extend through the corresponding slit. In other words, the first end plate may include at least two slits arranged on opposite sides of the first end plate, which are either both connected to one cavity extending between the slits, or alternatively may include at least two slits arranged on opposite sides of the first end plate, which are both connected to a respective cavity, therefore also including at least two cavities. In other words, the cavity and the slit extend perpendicular to the stacking direction and parallel to the side walls and form an opening running through the first end plate. Furthermore, the side walls are shaped such that they have one area that can extend through the slit and another area connected to the one area, that does not fit through this slit, so that the connection is achieved. There may be a single cavity, with the first end plate then having a corresponding slit on each side facing the corresponding side wall, in other words two slits extending in opposite directions from the cavity to the respective side wall. The first end plate may also include separate cavities with a separate slit on each side facing the corresponding side wall, in other words may have two cavities and two slits, each pair of which forms a connection with the corresponding side wall. The cavity may have different cross-sectional shapes with respect to the direction in which the cavities extend, for example rectangular, square, circular, elliptical, triangular or polygonal.

According to another embodiment, a portion of at least one of the side walls including the respective thickened end portion is bent such that the bent portion is inclined with respect to the stacking direction, wherein the bent portion may be inclined such that the bent portion extends perpendicular to the stacking direction. In other words, the portion of the side walls extending through the slits and the portion of the side walls including the thickened end portions may extend with an angle between more than 0° and 90° or less degrees, such that a portion of the respective side wall including this portion is disposed inside a space formed by the side walls extending in the stacking direction. The angle may be more than 25° degrees, and may be more than 45° degrees. The angle may be between 80° and 90° degrees.

According to another embodiment, at least one bent portion is connected to a non-bent portion of the corresponding side wall by a connecting element, for example a rib or strut, on an under side or upper side of the battery cell stack extending between both side walls. In other words, there is a connecting element that is arranged on the top side or under side of the battery cell stack and connects a region of the respective side wall that forms the form-fit sliding connection with the first end plate and a region of the respective side wall that is not involved in the form-fit sliding connection with the first end plate and extends along the stacking direction, thereby distributing stresses that act on the region of the form-fit sliding connection to other regions of the respective side wall, so that the form-fit sliding connection is relieved and stability is increased.

According to another embodiment, the thickened end portion is a material thickening and/or geometric thickening. In other words, the thickened end portion includes a material adaption or geometrical (structural) adaption that may be formed by a material adaptation of the side walls in the corresponding area or by adapting a geometric or structural shape of the corresponding area. In other words, the side walls in the corresponding area have a locally increased volume of material, so that this area has an increased cross-section with respect to a direction perpendicular to the stacking direction. Further, in other words, the side walls in the corresponding area may have a locally changed structure or shape, which is also accompanied by an increased cross-section. In the case of a material adaptation, the thickening is achieved, for example, by a local increase in the material of the side walls. In other words, the cross-section is increased in relation to a direction perpendicular to the stacking direction of the side walls in the area of the thickened end portions. In the case of a geometric or structural adaptation, the corresponding area of the side walls is achieved by shaping the side walls accordingly.

According to another embodiment, the geometric thickening of the thickened end portion includes a spirally wound area (part) of the side wall. This shape is particularly easy to achieve, for example a first end of each of the side and/or a second end of each of the side walls may have corresponding spiral windings. According to the disclosure, these spiral windings are then arranged within the cavities, whereas non-wound areas of the side walls can extend through the slit. The spiral windings offer a further advantage. Due to the swelling forces, elongation of the battery cells, the spacer and/or the module wall can occur along a positive or negative stacking direction. The spiral windings form a spring-like element that can change its cross-sectional area when the battery cell stack and the side walls change length. In other words, there is an element similar to a coil spring, whereby the distances between the spiral windings increase or decrease depending on the change in length of the battery cell stack and the side walls. This compensates for a certain change in length and, from a certain point, builds up a corresponding counteracting spring force that counteracts any further change in length. So, at the same time, the tolerance-related differences in dimensions in the stacking direction are considered, as the connection system allows the distance between the first end plate and the second end plate or between the end wall and the first end plate to be adjusted.

According to another embodiment, the side walls, the module wall and/or the first end plate includes a locking element that is designed to block displacement of the first end plate in the direction of the sliding direction when a form-fit sliding connection is established. The locking element can therefore prevent the first end plate from leaving its position when assembled. During operation, for example when used in a vehicle or similar, movement and/or vibrations can occur that subject the first end plate to forces that could move it out of position. The locking element is provided to counteract this.

According to another embodiment, the locking element is pivotable from a first position to a second position about a pivot axis which is perpendicular to the stacking direction, so that in the first position a displacement of the first end plate is possible and in the second position a displacement of the first end plate is not possible. This provides a locking element that is particularly easy to operate and enables assembly and subsequently prevents the first end plate from moving by itself. The locking element may be a rectangular plate or a rod-shaped strut which may be connected to one of the side walls and, in the first position, extends along the stacking direction and may not overlap a surface extending between the opposing side walls, so that assembly remains possible. In the second position, the locking element is pivoted in such a way that it overlaps at least one upper edge of the first end plate, which extends between the opposing side walls in the assembled state, so that movement is prevented. The locking element may also be connected to the first end plate. It may have a hook-shaped end section which, after pivoting into the second position, engages in a receiving element arranged on one of the side walls or the first end plate, such as an eyelet, or a corresponding hook. Several locking elements may be provided, whereby, for example, two locking elements are arranged on opposite sides of the battery cell stack, respectively, whereby a lower edge of the first end plate, which in the assembled state extends between the opposite side walls, also overlaps and movement in both positive and negative directions perpendicular to the stacking direction is prevented. The locking element may be arranged on a side wall, whereby it may be then arranged in an area that lies between the first and the second end side of the battery cell stack. The locking element may be rotatably connected to the side wall, whereby other directions of movement are blocked, so that in the second position the movement of the first end plate is blocked by the overlapping locking element.

According to another embodiment, the battery module includes two battery cell stacks and two module walls, wherein the first end plate is arranged between the two battery cell stacks and wherein the first end plate is connected to each of the side walls of the respective module walls by means of the form-fit sliding connection. In other words, the arrangement of the battery cell stack with battery cells stacked between the first and the second end sides in the stacking direction, and the module wall, the module wall including the two oppositely arranged side walls extending along the stacking direction and between which the battery cell stack is arranged, and the end wall arranged on the first end side of the battery cell stack and connecting the two side walls (to each other), is present on both opposite sides of the one first end plate. In other words, the battery cells of the respective battery cell stack both extend along the same stacking direction, but each with a different sign (positive and negative direction), so that they meet at the first end plate and are separated from the same. Each of the side walls of the respective module wall is connected to the first end plate by means of the form-fit sliding connection. In other words, the first end plate is connected on a first side to the side walls of one of the two module walls by means of the connection according to the disclosure and is connected on a second side to the side walls of the other of the two module walls by means of the connection according to the disclosure. Accordingly, the first end plate may be designed symmetrically. The embodiments of the first end plate described above may also be designed in duplicate or in such a way that they form the connection with both the side walls of one of the two module walls and the other of the module walls. In other words, for example, the slit and the cavity may be double and separate from each other or may be single and form the connection with all of the side walls. The first end plate may be a middle plate of the battery module. The high-voltage systems of most current electric vehicles are operated at a voltage level of around 400 volts. Over the years, 400 volts has established itself as the quasi-industry standard. Currently, 800-volt technology is also being used more and more frequently, meaning that a further standard will be added in the future. By using the first end plate as a middle plate, a battery module is provided that enables a particularly simple structure and, by using two stacks of 400 volts each, a mode of operation at 400 volts or 800 volts. For this purpose, the two battery cell stacks are connected in parallel to achieve 400-volt operation and in series to achieve 800-volt operation. Both charging/discharging, especially in bank charging, in which one "side" of the battery module is charged or discharged, and operation can be carried out at either 400 volts or 800 volts.

According to another embodiment, the first end plate includes a recess. The recess may extend perpendicular to the stack direction. This can save material.

According to another embodiment, the first end plate houses battery module management electronics of the battery module. In other words, the first end plate has areas or spaces that are designed to accommodate battery module management electronics. The first end plate then serves on the one hand as a space-saving option for the arrangement of these components and also serves to protect these components. The first end plate may have a high degree of rigidity so that it provides appropriate mechanical protection for these sensitive components. For example, one or more cavities may be provided which extend in a direction perpendicular to the stacking direction, i.e. in other words between two opposing outer surfaces of the first end plate. The cross-section of such a cavity may be rectangular, triangular, polygonal, circular or elliptical, so that a shape and dimensions may be selected that affect the stability as little as possible. The cavities for the arrangement of the component may be separate from areas of the first end plate that are involved in the form-fit sliding connection, for example separate from the cavities and slits. The first end plate may have a central area which is arranged centrally between two sides of the first end plate which extends perpendicular to the stacking direction, which remains free of receiving areas or hollow spaces, in other words has continuous first end plate material, as this essentially maintains its stability despite further adjacent or nearby receiving areas or hollow spaces. The central area may include a connecting bar that connects the several optional cavities for the housing function.

According to another aspect of the present disclosure, a method for assembling a battery module according to the disclosure is provided. The method for assembling a battery module includes a step of providing a battery cell stack with battery cells stacked between a first end side and a second end side in a stacking direction and a step of providing a module wall, the module wall including two side walls arrangeable on opposite sides of the battery cell stack and extendable along the stacking direction, and an end wall arrangeable on the first end side of the battery cell stack and connecting the two side walls (to each other). Further, the method includes a step of compressing the battery cell stack and a step of arranging the battery cell stack between the side walls of the module wall. Further a first end plate, which is arrangeable on the second end side of the full cell stack and opposite the end wall and connectable to the two side walls by means of a form-fit sliding connection, a sliding direction running perpendicular to the stacking direction, is provided. The form-fit sliding connection with the two side walls is established by sliding the first end plate along the sliding direction.

Yet another aspect of the present disclosure refers to a battery pack. The battery pack includes a plurality of battery modules according to the disclosure, configured in a series, parallel or a mixture of both to deliver a desired voltage and current, a battery management system (BMS), and a cooling circuit.

### Specific Embodiments

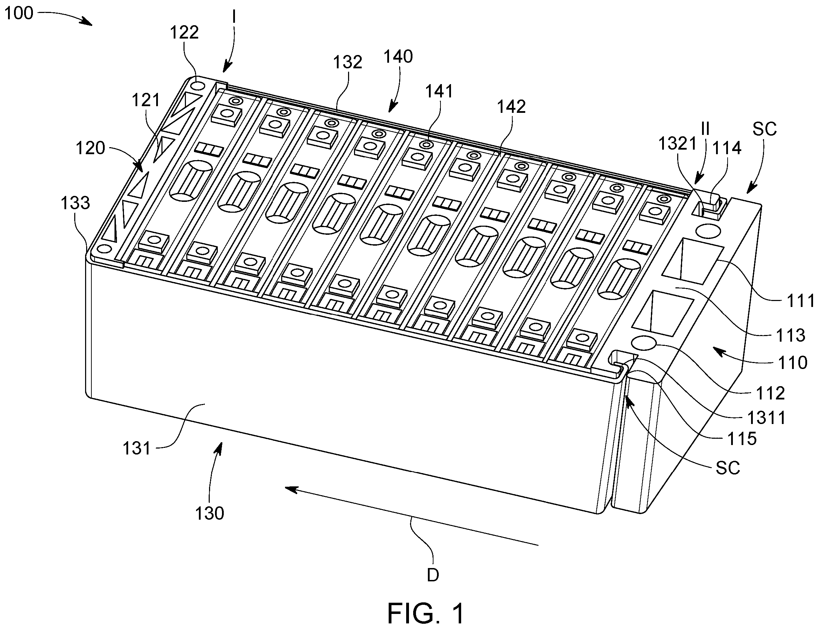

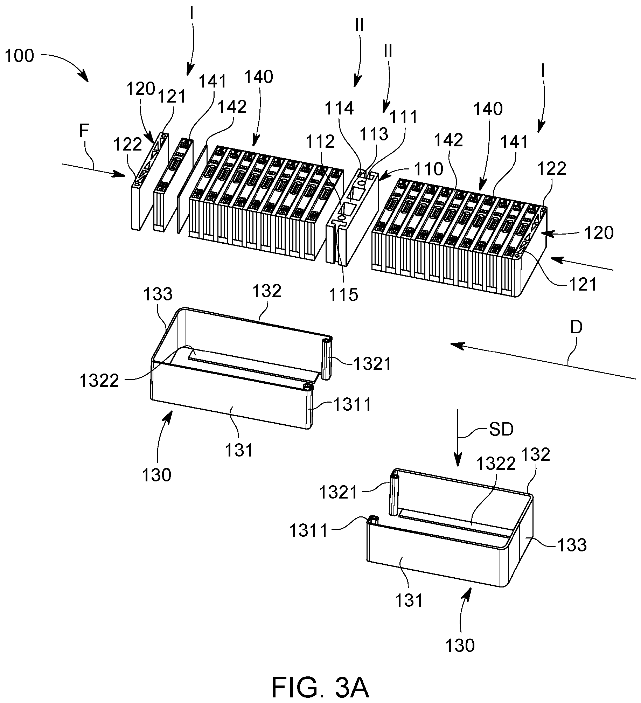

Fig. 1 is a perspective view illustrating a schematic structure of a battery module 100 according to an embodiment. The battery module 100 includes a battery cell stack 140 with battery cells 141 stacked between a first end side I and a second end side II in a stacking direction D. A spacer 142 is arranged between a pair of battery cells 141. The battery module 100 includes a module wall 130, the module wall 130 including two oppositely arranged side walls 131, 132, the first side wall 131 and the second side wall 132, both extending along the stacking direction D and between which the battery cell stack 140 is arranged, and an end wall 133 arranged on the first end side I of the battery cell stack 140 and connecting the two side walls 131, 132. A first end plate 110 is arranged on the second end side II of the battery cell stack 140 and opposite the end wall 133, wherein each of the side walls 131, 132 is connected to the first end plate 110 by means of a form-fit sliding connection SC, wherein a sliding direction SD (see Fig. 3A) extends perpendicular to the stacking direction D. In addition, the battery module 100 includes a second end plate 120 disposed on the first end side I of the battery cell stack 140 adjacent the end wall 133 and opposite the first end plate 110.

In other words, the shown battery module 100 includes two opposing side walls 131, 132, the first side wall 131 and the second side wall 132, having first and second end plates 110, 120 disposed at their first and second ends, respectively, which also oppose each other and are oriented orthogonally to the side walls 131, 132. A plurality of individual battery cells 141 are disposed between the first and second end plates 110, 120 along the stacking direction D. Typically, spacers 142 are disposed between the cells 141, as well as intermediate layers not shown, which is neither required nor precluded for consideration of the disclosure, but is entirely independent.

In the present embodiments, the module wall 130 is integrally formed in one piece and has a U-shape, but may also be multi-part.

The first end plate 110 includes two recesses 111, which extend perpendicular to the stacking direction D through the first end plate 110. Both recesses 111 have a rectangular cross-section, but may also be realized in other shapes. The two recesses 111 are separate from each other and are connected to each other by a central area, for example, a connecting bar 113. One or both recesses 111 may be used to accommodate electronic components. In any case, they make it possible to save material, whereby a reduction in the strength of the first end plate 110 due to the connecting bar 113 is counteracted. In addition, the first end plate 110 includes two mounting holes 112 arranged opposite one another, with the aid of which the battery module 100 may be fastened to desired structures, for example by means of screws. The first end plate 110 has two slits 115, each of which extends from an outer surface of the first end plate 110 over the entire height of the first end plate 110 and perpendicular to the stacking direction D. The slits 115 each open into a cavity 114, which may have a rectangular cross-sectional shape, although other shapes are also possible. In the present case, the cavity 114 has a greater width in relation to the stacking direction D than the slit 115.

The second end plate 120 includes a plurality of recesses 121, which extend perpendicular to the stacking direction D through the second end plate 120. The recesses 121 have a triangular cross-section, but may also be realized in other shapes. The recesses 121 are separate from each other and are connected to each other by material of the second end plate 120. The recesses 121 may be used to accommodate electronic components. In any case, they make it possible to save material. In addition, the second end plate 120 includes two mounting holes 122 arranged opposite one another, with the aid of which the battery module 100 may be fastened to desired structures, for example by means of screws.

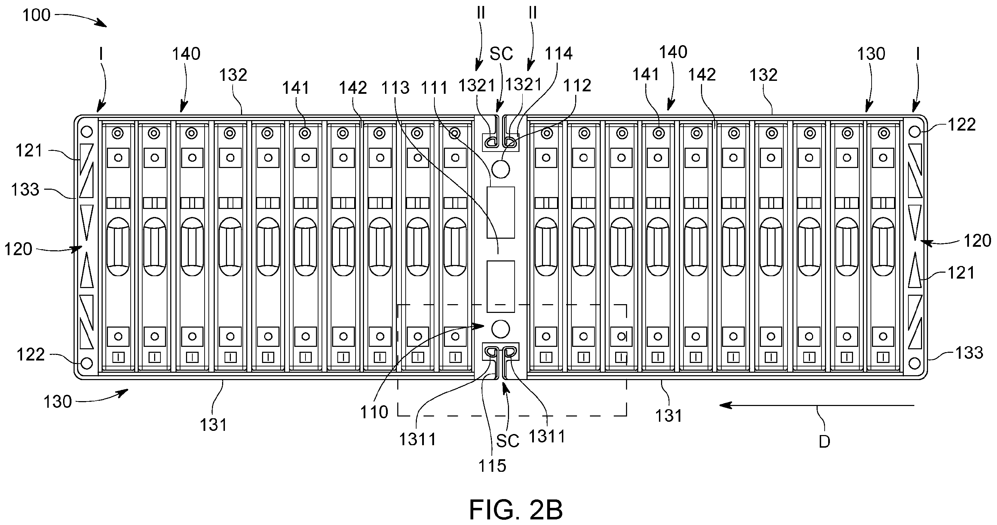

The form-fit sliding connection SC is formed between the cavity 114 and a fluidly connected slit 115 of the first end plate 110 both extending perpendicular to the stacking direction D and a thickened end portion 1311, 1321 of each of the side walls 131, 132, wherein the thickened end portions 1311, 1321 are slidable accommodated inside the cavities 114 while the side walls 131, 132 extend through the slits 115. A portion of the side walls 131, 132 including the thickened end portions 1311, 1321 is bent such that a bent portion is inclined with respect to the stacking direction D. The bent portion may extend perpendicular to the stacking direction D. The thickened end portion 1311,1321 may be a material thickening and/or geometric thickening. As for reasons of simplicity not shown in Fig. 1 the geometric thickening of the thickened end portion 1311,1321 includes a spirally wound area (part) of the side wall 131, 132 (see Figs. 2B to 3A). Due to the geometric thickening in the form of the spiral windings of the thickened end portions 1311, 1321, which are arranged in the cavities 114, the spiral windings do not fit through the slits 115. The arrangement may only be loosened by moving it perpendicular to the stacking direction D.

According to the shown embodiments, a first end of each of the side walls 131, 132 is connected to the first end plate 110 by means of the form-fit sliding connection SC.

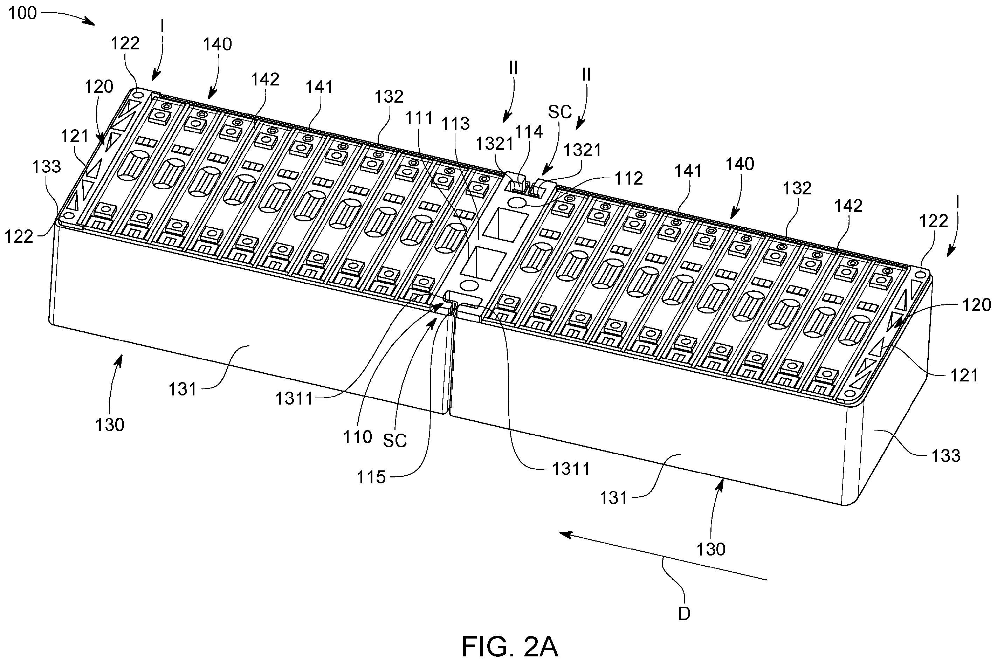

Fig. 2A is a perspective view illustrating a schematic structure of a battery module 100 according to another embodiment. The battery module 100 includes two battery cell stacks 140 and two module walls 130, wherein the first end plate 110 is arranged between the two battery cell stacks 140. The battery cell stacks 140 are identical in construction, but may also differ from one another. The first end plate 110 serves as a middle plate and is arranged centrally between a first end of the battery module 100 and a second end of the battery module 100.

Components that are identical to those in Fig. 1 are not described again, so that the description of these components follows from the description of Fig. 1.

The first end plate 110 essentially differs from that shown in Fig. 1 in that two cavities 114 are present, which extend from the slits 115 in both positive and negative stacking directions D. In other words, the cavities 114 basically have the same shape, but are extended to form a larger cross-section. In other words, the first end plate 110 of Fig. 2A has been mirrored along a plane that extends parallel to the slit 115 and connects both slits 115, so that the first end plate 110 has the same structure on both sides. However, this is not predetermined. Instead, the two cavities 114 present may also each be present as two pairs of separate cavities 114, each of which is fluidically connected to a slit 115. In other words, in such a case the first end plate 110 has a total of four cavities 114 and four slits 115, of which two pairs of cavities 114 and slit 115 are arranged on opposite sides of the first end plate 110.

The form-fit sliding connection SC is formed in the present case in that the first side wall 131 and the second side wall 132 of each of the two module walls 130 extend along a corresponding slit 115 and open into the corresponding thickened end portion 1311, 1321, which is arranged within the corresponding cavity 114 of the first end wall 110 and extends along it.

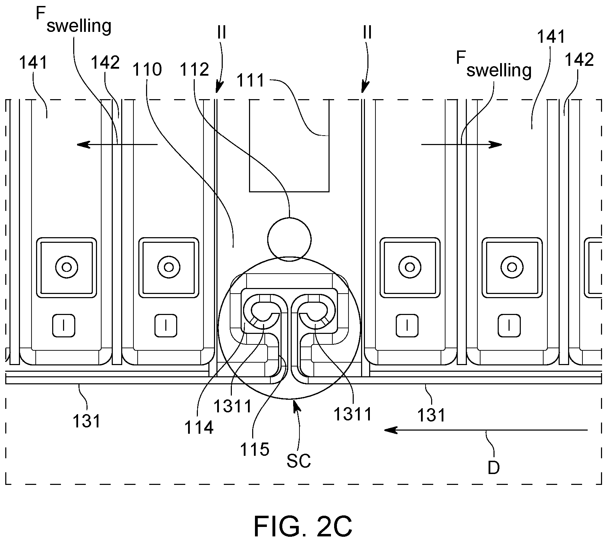

Fig. 2B is a top view illustrating a schematic structure of the battery module 100 shown in Fig. 2A. The symmetrical structure of the battery module 100 from Fig. 2A along an axis of symmetry of the first end plate 110 can be seen even more clearly here. Fig. 2C is a top view illustrating an enlarged view of a form-fit sliding connection SC from Fig. 2B. The geometric thickening of the thickened end portion including a spirally wound area (part) of the side wall is illustrated. It may include a partial winding or a plurality of windings. These spiral windings are arranged within the cavities 114, whereas non-wound areas of the side walls 131, 132 extend through the slit 115. The forces occurring there are also shown to explain the connection according to the disclosure. The form-fit sliding connection SC is intended to prevent the thickened end portions 1311, 1321 from moving through the slits 115 due to the swelling forces F_{Swelling} that occur, or to prevent relative movement of the first end plate 110 with respect to the side walls 131, 132. However, due to the spiral windings, an initially relative movement is permitted by stretching the battery cell stack 140 by reducing the distance of the spiral windings, whereby a spring force counteracting the swelling forces F_{Swelling} is built up. At a certain point, this force exceeds the swelling forces F_{Swelling}, preventing any further change in length.

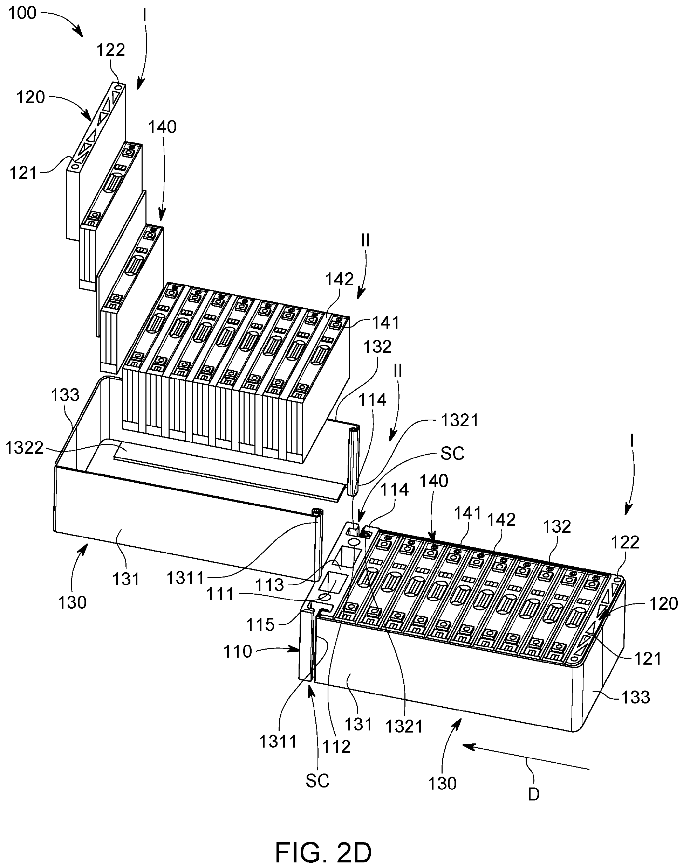

Fig. 2D is a partially exploded perspective view illustrating a schematic structure of the battery module shown in Fig. 2A. The side walls 131, 132 include a support surface 1322 on an underside of the battery cell stack 140 extending along the stacking direction D. In other words, each of the side walls 131, 132 includes an area extending perpendicular to the stacking direction D and along the stacking direction D so as to form a receptacle, for example rectangular, on which the battery cells 141 and spacers 142 are stored.

Fig. 3A is a view for illustrating an arrangement during a method according to an embodiment for assembling a battery module 100 according to some embodiments. The battery module 100 in the present case is similar to that in Fig 2A, although it may also differ. It can be seen that the assembly has not yet been completed. Some of the battery cells 141 and the spacers 142 are already stacked, while the rest of these components are being prepared and arranged.

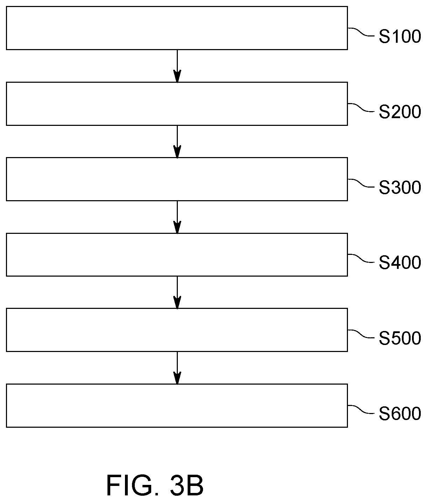

Fig. 3B illustrates a flow chart of a method according to an embodiment for assembling a battery module according to some embodiments.

Two battery cell stacks 140 with battery cells 141 stacked between a first end side I and a second end side II in a stacking direction D are provided in step S100. Further, in step S200 two module walls 130 are provided, each of the module walls 130 including two side walls 131, 132 arrangeable on opposite sides of the respective battery cell stack 140 and extending along the stacking direction D, and an end wall 133 arrangeable on the first end side I of the respective battery cell stack 140 and connecting the two side walls 131, 132 to each other. Furthermore, in step S300 the battery cell stacks 140 are compressed with an initial compression force F (see Fig. 3A) and in step S400 the battery cell stacks 140 are arranged between the side walls 131, 132 of the respective module wall 130. Furthermore, in step S500 a first end plate 110 is provided, which is arrangeable on the second end side of each of the respective battery cell stack 140 and opposite the respective end wall 133 and connectable to the two respective side walls 131, 132 by means of a form-fit sliding connection SC, a sliding direction SD running perpendicular to the stacking direction D. Finally, in step S600 the form-fit sliding connection SC with the two respective side walls 131, 132 is established by sliding the first end plate 110 along the sliding direction SD.

### Reference signs

- 100: battery module
- 110: first end plate
- 111: recess
- 112: mounting hole
- 113: central area/connecting bar
- 114: cavity
- 115: slit
- 120: second end plate
- 121: recess
- 122: mounting hole
- 130: module wall
- 131: first side wall
- 1311: thickened end portion
- 132: second side wall
- 1321: thickened end portion
- 1322: support surface
- 133: end wall
- 140: battery cell stack
- 141: battery cell
- 142: spacer
- SC: form-fit sliding connection
- F: initial compression force
- D: stacking direction
- SD: sliding direction
- F_{Swelling}: swelling forces

## Claims

1. A battery module (100) comprising:
a battery cell stack (140) with battery cells (141) stacked between a first end side (I) and a second end side (II) in a stacking direction (D),
a module wall (130), the module wall (130) comprising two oppositely arranged side walls (131, 132) extending along the stacking direction (D) and between which the battery cell stack (140) is arranged, and an end wall (133) arranged on the first end side (I) of the battery cell stack (140) and connecting the two side walls (131, 132), and
a first end plate (110) arranged on the second end side (II) of the battery cell stack (140) and opposite the end wall (133), wherein each of the side walls (131, 132) is connected to the first end plate (110) by means of a form-fit sliding connection (SC), wherein a sliding direction (SD) extends perpendicular to the stacking direction (D).

2. The battery module (100) as claimed in claim 1, wherein the module wall (130) comprises a U-shaped module wall (130) at least partially enclosing the battery cell stack (140).

3. The battery module (100) as claimed in claim 1 or 2, wherein each of the side walls (131, 132) is connected to the end wall (133) by means of a form-fit sliding connection (SC), with a sliding direction (SD) running perpendicular to the stacking direction (D).

4. The battery module (100) as claimed in any one of the preceding claims, wherein a first end of each of the side walls (131, 132) is connected to the first end plate (110) by means of the form-fit sliding connection (SC) and/or wherein a second end of each of the side walls (131, 132) is connected to the end wall (133) by means of the form-fit sliding connection (SC).

5. The battery module (100) as claimed in any one of the preceding claims, wherein the module wall (130) is integrally one-piece.

6. The battery module (100) as claimed in any one of the preceding claims, wherein the form-fit sliding connection (SC) is formed between a cavity (114) and a fluidly connected slit (115) of the first end plate (110) both extending perpendicular to the stacking direction (D) and a thickened end portion (1311, 1321) of each of the side walls (131, 132), wherein the thickened end portions (1311, 1321) are slidable accommodated inside the corresponding cavity (114) while the side walls (131, 132) extend through the corresponding slit (115).

7. The battery module (100) as claimed in claim 6, wherein a portion of at least one of the side walls (131, 132) comprising the respective thickened end portion (1311, 1321) is bent such that the bent portion is inclined with respect to the stacking direction (D), preferably such that the bent portion extends perpendicular to the stacking direction (D).

8. The battery module (100) as claimed in claim 6, wherein the thickened end portion (1311, 1321) is a material thickening and/or geometric thickening.

9. The battery module (100) as claimed in claim 8, wherein the geometric thickening of the thickened end portion comprises a spirally wound area of the side wall.

10. The battery module (100) as claimed in any one of the preceding claims, wherein the side walls (131, 132), the module wall (130) and/or the first end plate (110) comprise a locking element that is designed to block displacement of the first end plate (110) in the direction of the sliding direction (SD) when a form-fit sliding connection (SC) is established.

11. The battery module (100) as claimed in claim 10, wherein the locking element is pivotable from a first position to a second position about a pivot axis which is perpendicular to the stacking direction (D), so that in the first position a displacement of the first end plate (110) is possible and in the second position a displacement of the first end plate (110) is not possible.

12. The battery module (100) as claimed in any one of the preceding claims, wherein the battery module (100) comprises two battery cell stacks (140) and two module walls (130), wherein the first end plate (110) is arranged between the two battery cell stacks (140) and wherein the first end plate (110) is connected to each of the side walls (131, 132) of the respective module walls (130) by means of the form-fit sliding connection (SC).

13. The battery module (100) as claimed in any one of the preceding, wherein the first end plate (110) houses battery module management electronics of the battery module (100).

14. A method for assembling a battery module (100) as claimed in any one of the preceding claims, comprising the following steps:
a) providing a battery cell stack (140) with battery cells (141) stacked between a first end side (I) and a second end side (II) in a stacking direction (D);
b) providing a module wall (130), the module wall (130) comprising two side walls (131, 132) arrangeable on opposite sides of the battery cell stack (140) and extendable along the stacking direction (D), and an end wall (133) arrangeable on the first end side (I) of the battery cell stack (140) and connecting the two side walls (131, 132) to each other;
c) compressing the battery cell stack (140);
d) arranging the battery cell stack (140) between the side walls (131, 132) of the module wall (130);
e) providing a first end plate (110), which is arrangeable on the second end side (II) of the battery cell stack and opposite the end wall (133) and connectable to the two side walls (131, 132) by means of a form-fit sliding connection (SC), a sliding direction (SD) running perpendicular to the stacking direction (D);
f) establishing the form-fit sliding connection (SC) with the two side walls (131, 132) by sliding the first end plate (110) along the sliding direction (SD).

15. A battery pack comprising:
a plurality of battery modules (100) as claimed in any one of the claims 1 to 13, configured in a series, parallel or a mixture of both to deliver a desired voltage and current,
a battery management system (BMS),
and a cooling circuit.
